# EUROPÄISCHE PATENTSCHRIFT

(11) **EP 1 608 604 B1**
(45) Veröffentlichungstag und Bekanntmachung des Hinweises auf die Patenterteilung: **06.08.2014**
(21) Anmeldenummer: 04725349.7
(22) Anmeldetag: 02.04.2004
(51) Int. Cl.: C04B 28/02, C04B 20/10, C04B 40/06

(54) **PULVERFÖRMIGE BAUSTOFFZUSAMMENSETZUNG**
POWDERY BUILDING COMPOUND
COMPOSITION DE MATERIAU DE CONSTRUCTION PULVERULENTE

(30) Priorität: 03.04.2003 DE 10315270
(43) Veröffentlichungstag der Anmeldung: 28.12.2005
(73) Patentinhaber: Construction Research & Technology GmbH, 83308 Trostberg (DE)
(72) Erfinder: HOLLAND, Uwe, 86517 Wehringen (DE); DEGENKOLB, Matthias, 86199 Augsburg (DE); RIEDMILLER, Joachim, 86316 Friedberg (DE); GÄBERLEIN, Peter, 86159 Augsburg (DE); STOHR, Werner, 86161 Augsburg (DE); PFEUFFER, Thomas, 83308 Trostberg (DE); HUBER, Christian, 83308 Trostberg (DE)
(74) Vertreter: Dey, Michael
(86) Internationale Anmeldenummer: PCT/EP2004/003519
(87) Internationale Veröffentlichungsnummer: WO 2004/087606

(56) Entgegenhaltungen:
- WO-A-97/33685
- WO-A-98/25865
- CH-A- 270 010
- DE-A- 19 651 448
- GB-A- 370 878
- GB-A- 938 567
- US-A- 3 345 302
- US-A- 5 254 385

## Beschreibung

Gegenstand der vorliegenden Erfindung ist die Verwendung einer pulverförmigen Baustoffzusammensetzung umfassend ein reaktives Trägermaterial sowie eine auf das Trägermaterial aufgebrachte flüssige Polymerverbindung zur Einstellung der Verarbeitungszeit.

Gegenwärtig gewinnen bauchemische Produkte, die den Verarbeiter in die Lage versetzen, einen möglichst schnellen Baufortschritt zu erreichen, immer mehr an Bedeutung. Dem Fachmann sind dabei vor allem entsprechend schnell abbindende Systeme bekannt, deren Eigenschaften hinsichtlich dem Abbindeverhalten und der Festigkeitsentwicklung durch das Verhältnis aus Portlandzement und Tonerdeschmelzzement festgelegt werden (K. Krenkler, Chemie des Bauwesens, Bd. 1, S. 178).

Um dem Schwund entsprechender Rezepturen zu begegnen, kann der versierte Formulierer zusätzlich zum bereits im Portlandzement enthaltenen Sulfatträger, der vornehmlich der Abbindesteuerung des Portlandzementes dient, entsprechend weitere Sulfat-einbringende Verbindungen einsetzen. Diese sorgen über ihre temperaturabhängige Löslichkeit für die Bildung expansiver, kristallwasserreicher sog. Afm/Aft-Phasen und sie wirken dem Schwinden der entsprechenden Formulierung im plastischen Zustand entgegen. Bei geschickter Wahl der Komponenten und deren mengenmäßiger Zusammensetzung können die Sulfat-einbringenden Verbindungen zusätzlich über den Effekt der "kristallinen Wasserbindung" für eine schnelle Reife des Untergrundes zum Belegen mit dampfdiffusionsdichten Belägen sorgen.

Allgemein bekannt ist auch die Tatsache, dass die hohen Anforderungen an die eingesetzten Baustoffe den Einsatz zahlreicher Additive wie Fließmittel, redispergierbarer Pulver etc. notwendig machen. Darüber hinaus sind die geforderten Verarbeitungseigenschaften solch schnell abbindender Systeme nach dem Stand der Technik generell nur durch den kombinierten Einsatz beschleunigender und verzögernder Additive wie z.B. Li₂CO₃, Ca(OH)₂, Weinsäure, Citronensäure etc. einstellbar.

Aufgrund des komplexen und auch heute noch nicht völlig verstandenen Zusammenspiels der einzelnen Komponenten in diesen extrem komplizierten Formulierungen werden diese Produkte in der Regel als "Einstellprodukte" bezeichnet, d.h. die Formulierung muss bei jeder einzelnen Produktionskampagne erneut auf die aktuell zur Verfügung stehenden Rohstoffe eingestellt werden.

DE 19651448 A1 beschreibt eine Zusammensetzung zur Erzeugung von Leichtgips, wobei ein Treibmittel enthalten ist, welches verzögert nach seiner Mischung mit Wasser Gas erzeugt. Dabei wird das Treibmittel mit einer wasserdurchlässigen, vorzugsweise filmbildenden Beschichtung versehen.

GB 370,878 offenbart das Ablösen eines polymeren Beschichtungsmaterials vom Trägermaterial zur Wiedererlangung dessen eigentlicher Eigenschaften, wobei als Trägermaterial unter anderem Zement, Kalk und Gips genannt werden. Die Beschichtung wird mit dem Ziel eingesetzt, die Trägermaterialien einer vorzeitigen Reaktion aufgrund der Luftfeuchtigkeit zu entziehen.

Aufgrund der immer noch als nachteilig erachteten Komplexität der beschriebenen bauchemischen Produkte hat sich für die vorliegende Erfindung die Aufgabe gestellt, eine pulverförmige Baustoffzusammerisetzung mit verzögerter Wirkung bereit zu stellen, die hinsichtlich ihrer Verarbeitbarkeit und dem Einsatz der komplexen Steueradditive eine alternative und einfache Möglichkeit zur Einstellung der Verarbeitungszeit darstellt.

Gelöst wurde diese Aufgabe durch die Verwendung einer pulverförmigen Baustoffzusammensetzung, umfassend
a) ein reaktives Trägermaterial, sowie
b) eine auf das Trägermaterial aufgebrachte flüssige Polymerverbindung zur Einstellung der Verarbeitungszeit, wobei die gesteuerte Aushärtung durch das Ablösen der Polymerverbindung vom Trägermaterial erfolgt und wobei das Ablösen durch die Zugabe eines Aktivators unterstützt wird.

Überraschend wurde mit dieser Zusammensetzung gefunden, dass beispielsweise in Portlandzement/Tonerdeschmelzzement-Mischungen durch die verzögerte Freisetzung der beschleunigenden Tonerdeschmelzzement-Komponente auch ohne den bislang erforderlichen Zusatz entsprechender Verzögerer eine für den Anwender ausreichend lange Verarbeitungszeit eingestellt werden kann. Dabei kann gleichzeitig durch die nun verspätet einsetzende Wirkung des als beschleunigende Komponente wirkenden reaktiven Trägermaterials mit dem Anrühren der Zubereitung ein Verarbeitungsprofil erreicht werden, wie es für ein normal abbindendes System auf Basis Portlandzement üblich ist. Dabei ist eine über die Zeit stabile Konsistenz festzustellen, ein Ansteifen ist nicht zu beobachten. Zudem ist nach der Freisetzung der beschleunigenden Komponente entsprechend einem schnell abbindenden Portlandzement/Tonerdeschmelzzement-System ein schnelles Erstarren und eine schnelle Festigkeitsentwicklung festzustellen. Völlig überraschend wurde auch gefunden, dass die erfindungsgemäße Baustoffzusammensetzung im Vergleich zu einem konventionell formulierten System, in dem die Portlandzement- und die Tonerdeschmelzzement-Komponente zeitgleich mit ihrer Hydratation beginnen, analog einem Portlandzement-System reagieren, dem die entsprechende Tonerdeschmelzzement-Menge bereits zum Zeitpunkt t₀ zur Verfügung stand. Dies ist vermutlich auf die Vorhydratation des Portlandzementes und die erst später zum Zeitpunkt tₓ ermöglichte Mitreaktion des Tonerdeschmelzzementes zurückzuführen.

Im Rahmen der vorliegenden Erfindung hat sich als Komponente a) ein Trägermaterial als besonders geeignet gezeigt, das aus einem (latent-) hydraulischen Bindemittel, ausgewählt aus der Gruppe Portlandzement, Portlandzerüentklinkermehle, Tonerdeschmelzzemente, Calciumsulfoaluminate, Natriumaluminat, CaSO₄ x nH₂O (mit n = 0 bis 1,5) und CaO besteht. Bevorzugt sind Tonerdeschmelzzemente. Gleichermaßen gut geeignet ist aber auch ein Trägermaterial, bei dem es sich um anorganische Zusätze, ausgewählt aus der Gruppe CaSO₄ x 2 H₂O, Aluminiumverbindungen wie Al(OH)₃ oder Al₂(SOa)₃, Ca(NO₃)₂ und Ca(NO₂)₂ handelt. Die Erfindung berücksichtigt als Trägermaterial aber auch organische Verbindungen, die aus der Gruppe Calciumformiat, Weinsäuren und deren (gemischte) Salze sowie Citronensäure und deren (gemischte) Salze, Triethanolaminhydrochlorid, Tris(hydroxymethyl)-aminomethan und Hydrazide ausgewählt werden können.

Als geeignete reaktive Trägermaterialien kommt somit ein breites Spektrum an zeitlich verzögert freisetzbaren Komponenten in Frage, die in der Lage sind, in die Ausbildung der makroskopischen Eigenschaften der Endprodukte einzugreifen.

Hinsichtlich der in der erfindungsgemäßen Zusammensetzung als Komponente b) enthaltenen Polymerverbindung sieht die Erfindung vorzugsweise mindestens einen Vertreter der Reihe Polyvinylalkohole, Polyvinylacetate, Polymere auf Basis AMPS, (un-)modifizierte Biopolymere wie Xanthane, Carrageenane, Celluloseether und Stärkeether, Silane, Polyethylenglykole und Wachse vor.

Besonders vorteilhaft haben sich Baustoffzusammensetzungen gezeigt, die das Trägermaterial mit einer mittleren Teilchengröße von 0,001 µm bis 1 cm, insbesondere von 0,01 µm bis 1 mm enthalten.

Hierin wird weiterhin die Verwendung der beschriebenen pulverförmigen Zusammensetzung zur zeitlich gesteuerten "inneren Trocknung" von Baustoffen, die auf wässrigen Dispersionen basieren, beschrieben.

Die gesteuerte Aushärtung erfolgt erfindungsgemäß durch das Ablösen der Polymerverbindung vom Trägermaterial und hierbei insbesondere durch eine mechanische Einwirkung und/oder durch die Einwirkung eines Lösemittels, wobei im letztgenannten Fall Wasser als Lösemittel besonders zu bevorzugen ist.

Das Ablösen wird erfindungsgemäß durch die Zugabe eines Aktivators vor, während und/oder nach dem Anmischen des Baustoffgemisches unterstützt, wobei dann als Aktivator mindestens ein Vertreter der Reihe der Borate, vorzugsweise in Mengen 0,01 bis 50 Gew.-%, bezogen auf die Menge an Trägermaterial, eingesetzt wird. Dabei kann erfindungsgemäß der Aktivator sowohl in flüssiger Form als auch als Pulver oder als eine auf einem Trägermaterial fixierte Flüssigkeit zugesetzt werden.

Schließlich berücksichtigt die vorliegende Erfindung noch eine spezielle Verwendung der pulverförmigen Zusammensetzung in Baustoffgemischen, die neben Zuschlagsstoffen und Additiven Bindemittel, vorzugsweise in Form von Portlandzement, Portlandzementklinkermehlen, Tonerdeschmelzzementen, Kalk, CaSO₄ mit unterschiedlichen und einstellbaren Hydratstufen, Wasserglas, (aktivierbare) Schlacken, wie z.B. Hüttensande und Flugaschen, Calciumsulfoaluminate und/oder Phosphatzemente, enthalten.

Zusammenfassend folgt die hierin beschriebene pulverförmige Baustoffzusammensetzung bei ihrer jeweiligen Verwendung dem Prinzip, dass durch das Coaten oder Beschichten einzelner oder mehrerer reaktiver Komponenten mit geeigneten Überzugsmaterialien, die sich im Zuge des Anmischens der wässrigen Zubereitung von den gecoateten Komponenten ablösen und diese bezogen auf den ersten Zusatz von Wasser zur trockenen Zubereitung zeitlich verzögert in ihrer ursprünglichen aktiven Form freisetzen, eine zeitlich verzögerte Freisetzung von Komponenten innerhalb einer nach Wasserzugabe aushärtenden Zubereitung einstellen lässt. Dabei kann die Freisetzung der gecoateten Komponente entweder durch die mechanische Abrasion während des Anmischens oder durch langsames Auflösen in Wasser erreicht werden. Das Ablösen wird durch die Zugabe eines geeigneten Aktivators unterstützt.

Erfindungsgemäß wird ein reaktives Trägermaterial bereitgestellt, welches eine abbindende Wirkung aufweist und besonders bevorzugt ein hydraulisches oder latent hydraulisches Bindemittel ist, welches seine abbindende Wirkung in Gegenwart von Wasser entfaltet.

Auf dieses reaktive Trägermaterial wird eine flüssige Polymerverbindung aufgebracht. Diese flüssige Polymerverbindung bedeckt zunächst das Trägermaterial, sodass es anfänglich nicht für die Abbindereaktion zur Verfügung steht. Bevorzugt wird die Menge an flüssiger Polymerverbindung zu Trägermaterial derart eingestellt, dass eine vollständige Umhüllung der Trägermaterialpartikel mit der Polymerverbindung erfolgt. Die Freisetzung des reaktiven Trägermaterials erfolgt verzögert, z.B. durch mechanisches Entfernen der Polymerhülle oder Auflösen der Polymerhülle in einem Lösungsmittel, z.B. Wasser wobei das Ablösen durch die Zugabe eines Aktivators unterstützt wird. Nach Freisetzung kann das reaktive Trägermaterial dann - verzögert - an der Abbindereaktion teilnehmen.

Die Erfindung betrifft somit die Verwendung einer pulverförmigen Baustoffzusammensetzung umfassend ein reaktives Trägermaterial sowie eine auf das Trägermaterial aufgebrachte flüssige Polymerverbindung zur Einstellung der Verarbeitungszeit. Mit dieser Zusammensetzung, die als Trägermaterial vorzugsweise (latent-)hydraulische Bindemittel, anorganische Zusätze und/oder organische Verbindungen sowie als Polymerverbindung beispielsweise Polyvinylalkohole, Polyvinylacetate und Polymere auf Basis AMPS enthalten kann, gelingt durch das zeitabhängige Ablösen der Polymerkomponente vom Trägermaterial dessen zeitlich verzögerte Freisetzung in der mit Wasser angemachten bauchemischen Abmischung. Somit erfolgt mit der hierin beschriebenen pulverförmigen Baustoffzusammensetzung eine zeitlich gesteuerte Aushärtung von hydratisierbaren Baustoffgemischen und es ist auch eine zeitlich gesteuerte "innere Trocknung" von Baustoffen möglich, die auf wässrigen Dispersionen basieren.

Die nachfolgenden Beispiele verdeutlichen die Vorteile der erfindungsgemäβen Zusammensetzung.

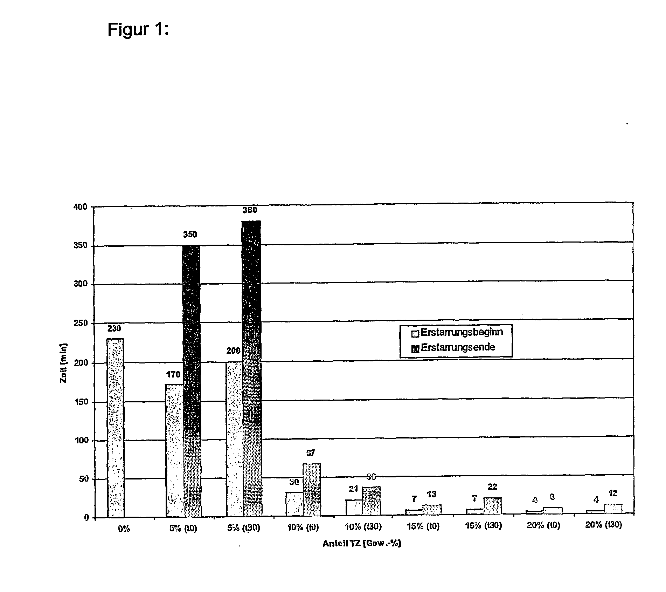

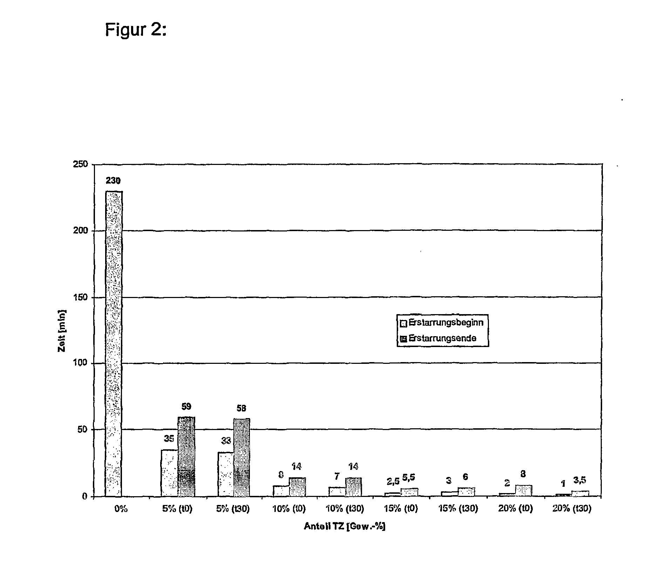

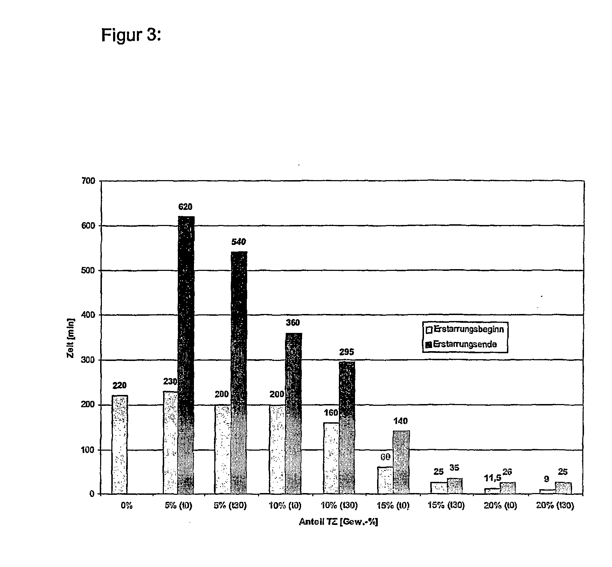

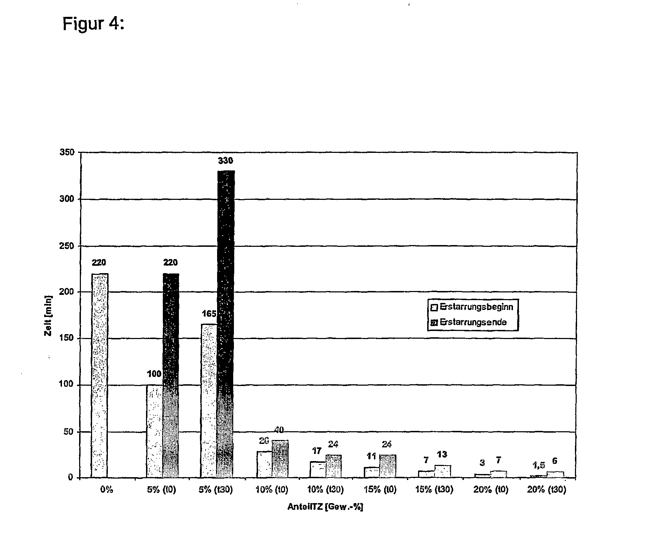

In den Figuren 1 bis 4 sind die Erstarrungszeiten verschiedener Systeme dargestellt.
Figur 1: System PZ/TZ 1;
Figur 2: System PZ1/TZ 2;
Figur 3: System PZ 2/TZ 1
Figur 4: System PZ 2/TZ 2

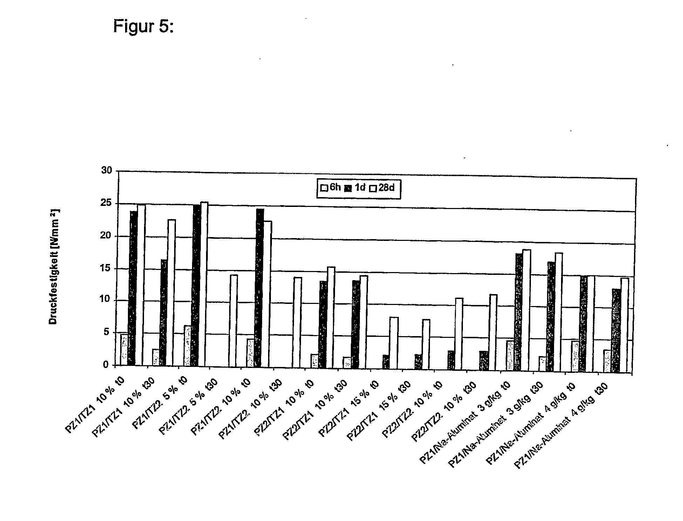

Figur 5 zeigt die Druckfestigkeit und

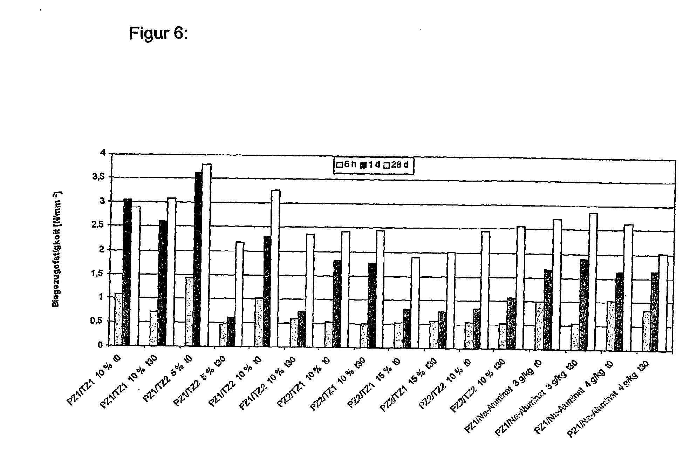

Figur 6 die Biegezugfestigkeit der verschiedenen Systeme.

### Beispiele

### Vergleichsbeispiel:

Die untersuchten Systeme bestanden aus 60 Gew.-% Sand und 40 Gew.-% einer Zement-Komponente, die sich in jedem Fall aus Portlandzement (PZ) und einem Tonerdeschmelzzement (TZ) zusammensetzte, wobei der Anteil des Tonerdeschmelzzementes von 0 bis 20 Gew.-% variiert wurde. Der Tonerdeschmelzzement wurde jeweils 30 Minuten nach dem Anmachen zugegeben (t₃₀). Zum Vergleich wurde jede Mischung auch bereits beim Anrühren mit verfügbarem Tonerdeschmelzzement angemacht (t₀). Vor dem Anrühren mit Wasser wurden die trockenen Pulvermischungen homogen vermischt, danach in das Wasser eingestreut und mit einem Rilem-Mischer angerührt. Die Mischungen wurden dabei jeweils mit Wasser auf vergleichbare Konsistenzen eingestellt, wozu je 1,5 kg einer aus 900 g Sand und 600 g Zement (PZ und TZ) bestehenden Pulvermischung mit der jeweiligen Menge Wasser angerührt wurde (vgl. Tabelle 1). Zur vergieichsweisen Austestung einer verspäteten Zugabe des Tonerdeschmelzzementes wurde dieser nach 30 Minuten zur bereits mit Wasser angemachten Mischung zugegeben und diese Mischung erneut mit dem Rilem-Mischer homogenisiert.

Der jeweilige Erstarrungsanfang und das Erstarrungsende wurden wie bei den Beispielen 2 und 3 mit einem Vicat-Messgerät bestimmt.

Die verwendeten Abkürzungen bedeuten:
PZ 1: Portlandzement Typ Cem I 42,5 R
PZ 2: Portlandzement Typ Cem I 32,5 R
TZ 1: Tonerdeschmelzzement (Fe-reich)
TZ 2: Tonerdeschmelzzement (Fe-arm)

**Tabelle 1: Zusammensetzungen der Mischungen**

| **System** | **Anteil Aluminatkomponente** | **Erstarrungsbeginn [min]** | **Erstarrungsende [min]** |
|---|---|---|---|
| **PZ1/TZ1** | | | |
| | 0% | 230 | |
| 1 | 5% (t₀) | 170 | 350 |
| 2 | 5% (t₃₀) | 200 | 380 |
| 3 | 10% (t₀) | 30 | 67 |
| 4 | 10% (t₃₀) | 21 | 36 |
| 5 | 15% (t₀) | 7 | 13 |
| 6 | 15% (t₃₀) | 7 | 22 |
| 7 | 20% (t₀) | 4 | 8 |
| 8 | 20% (t₃₀) | 4 | 12 |

| **PZ1/TZ2** | | | |
|---|---|---|---|
| | 0% | 230 | |
| 9 | 5% (t₀) | 35 | 59 |
| 10 | 5% (t₃₀) | 33 | 58 |
| 11 | 10% (t₀) | 8 | 14 |
| 12 | 10% (t₃₀) | 7 | 14 |
| 13 | 15% (t₀) | 2,5 | 5,5 |
| 14 | 15% (t₃₀) | 3 | 6 |
| 15 | 20% (t₀) | 2 | 8 |
| 16 | 20% (t₃₀) | 1 | 3,5 |

| **PZ2/TZ1** | | | |
|---|---|---|---|
| | 0% | 220 | |
| 17 | 5% (t₀) | 230 | 620 |
| 18 | 5% (t₃₀) | 200 | 540 |
| 19 | 10% (t₀) | 200 | 360 |
| 20 | 10% (t₃₀) | 160 | 295 |
| 21 | 15% (t₀) | 60 | 140 |
| 22 | 15% (t₃₀) | 25 | 35 |
| 23 | 20% (t₀) | 11,5 | 26 |
| 24 | 20% (t₃₀) | 9 | 25 |

| **PZ2/TZ2** | | | |
|---|---|---|---|
| | 0% | 220 | |
| 25 | 5% (t₀) | 100 | 220 |
| 26 | 5% (t₃₀) | 165 | 330 |
| 27 | 10% (t₀) | 28 | 40 |
| 28 | 10% (t₃₀) | 17 | 24 |
| 29 | 15% (t₀) | 11 | 24 |
| 30 | 15% (t₃₀) | 7 | 13 |
| 31 | 20% (t₀) | 3 | 7 |
| 32 | 20% (t₃₀) | 1,5 | 6 |

| **PZ1/Na-Aluminat** | | | |
|---|---|---|---|
| | 3 g/kg (t₀) | 75 | 90 |
| | 3 g/kg (t₃₀) | 90 | 105 |
| | 4 g/kg (t₀) | 13 | 51 |
| | 4 g/kg (t₃₀) | 56 | 78 |
| | 5 g/kg (t₀) | 0 | 0 |
| | 5 g/kg (t₃₀) | 4,5 | 18,5 |

Deutlich ist die nach verspäteter Zugabe einsetzende Wirkung des TZ als erstarrungsbeschleunigende Komponente erkennbar. Zementtypisch treten dabei je nach Gehalt an zugesetztem TZ gewisse zum Teil nicht systematische Verschiebungen der Zeiten von Erstarrungsbeginn und Erstarrungsende auf.

Die zugehörigen Festigkeiten nach 6h, 1d, 28d gemäß Tabelle 2 zeigen, dass durch eine verspätete Zugabe (t₃₀) technisch verwertbare Festigkeiten erhalten werden, die denen entsprechen wie sie aus einem gemeinsamen Anrühren (t₀) resultieren.

**Tabelle 2: Mischungen zur Untersuchung der Festigkeiten**

| **Nr.** | **Zeit** | **Zement-System** | **TZ-Anteil** | **Zementanteile** | **Na-Aluminat** | **Wasser** | **Sand** | **W/Z-Wert** | **DINflow** |
|---|---|---|---|---|---|---|---|---|---|
| | | | | | | | | | |
| a | 0 min | PZ1/TZ1 | 10% | 1080 g/120 g | | 529 g | 1800 g | 0,44 | 16,2 cm |
| b | 30 min | PZ1/TZ1 | 10% | 1080 g/120 g | | 529 g | 1800 g | 0,44 | 15,2 cm |
| c | 0 min | PZ1/TZ2 | 5% | 140 g/60 g | | 535 g | 1800 g | 0,45 | 15,9 cm |
| d | 30 min | PZ1/TZ2 | 5% | 1140 g/60 g | | 535 g | 1800 g | 0,45 | 15,0 cm |
| e | 0 min | PZ1/TZ2 | 10% | 1080 g/120 g | | 642 g | 1800 g | 0,54 | 15,0 cm |
| f | 30 min | PZ1/TZ2 | 10% | 1080 g/120 g | | 642 g | 1800 g | 0,54 | 15,5 cm |
| g | 0 min | PZ2/TZ1 | 10% | 1080 g/120 g | | 549 g | 1800 g | 0,46 | 15,0 cm |
| h | 30 min | PZ2/TZ1 | 10% | 1080 g/120 g | | 549 g | 1800 g | 0,46 | 14,0 cm |
| i | 0 min | PZ2/TZ1 | 15% | 1020 g/180 g | | 552 g | 1800 g | 0,46 | 15,3 cm |
| j | 30 min | PZ2/TZ1 | 15% | 1020 g/180 g | | 552 g | 1800g | 0,46 | 15,3 cm |
| k | 0 min | PZ2/TZ2 | 10% | 1080 g/120 g | | 592 g | 1800 g | 0,49 | 16,7 cm |
| l | 30 min | PZ2/TZ2 | 10% | 1080 g/120 g | | 592 g | 1800 g | 0,49 | 16,0 cm |
| m | 0 min | PZ1/Na-Aluminat | 3 g/kg | 1200 g | 9 g | 693 g | 1800 g | 0,58 | 17,2 cm |
| n | 30 min | PZ1/Na-Aluminat | 3 g/kg | 1200 g | 9 g | 69 g | 1800 g | 0,58 | 17,2 cm |
| o | 0 min | PZ1/Na-Aluminat | 4 g/kg | 1200 g | 12 g | 768 g | 1800 g | 0,64 | 16,0 cm |
| p | 30 min | PZ1/Na-Aluminat | 4 g/kg | 1200 g | 12 g | 768 g | 1800 g | 0,64 | 15,2 cm |

Die folgenden Beispiele 2 und 3 veranschaulichen den Effekt der verzögerten Freisetzung durch ein sich verzögert auflösendes Coating gemäß Erfindung.

### Beispiel 2:

### Beschichtung mit Polyvinylalkohol

Je 500 g der mineralischen Komponenten wurden mit 300 g eines Polyvinylalkohols (Mowiol 40-88) innig vermischt und in einem heizbaren Knetreaktor bei 190 °C intensiv verknetet. Die erhaltene abgekühlte Masse wurde in einer Kaffeemühle zerkleinert und durch ein 1 mm Sieb gesichtet.

Zum Einsatz kamen folgende mineralische Komponenten:
a) Weißzement
b) Tonerdeschmelzzement 1 (TZ 1 = Fe-reich)
c) Tonerdeschmelzzement 2 (TZ 2 = Fe-arm)

Zur Austestung der Güte des Coatings wurde in einem einfachen Vorversuch die alkalische Reaktion des Weißzementes in Wasser ausgenutzt. Man streut dazu 3 g des entsprechend gecoateten Materials in 100 ml Wasser mit pH = 7, das zusätzlich einige Tropfen Phenolphtaleinlösung enthält. Man misst die Zeit bis zum Umschlag des Phenolphtaleins von farblos nach rot:

| **Versuch** | **Zeit bis Farbumschlag [min]** | **Aktivator** |
|---|---|---|
| Weißzement (ungecoatet) | Sofort | keiner |
| Beispiel 2a) | > 10 | Borax |
| Beispiel 2a) Vergleich | > 40 | keiner |

### Beispiel 3: (Vergleich)

### Beschichtung mit flüssigen Komponenten

Je 20 kg der mineralischen Komponente (= reaktives Trägermaterial) wurden in einem Lödigemischer bei 40 U/min., Messerkopf Stufe 1, mit Hilfe einer Eindüsvorrichtung mit x I der Coatingflüssigkeit besprüht. Es wurde ein weitgehend rieselfähiges, leicht klumpiges Material erhalten, das durch ein 1 mm Sieb gesichtet wurde.

| **Beispiel 3** | **reaktives Trägermaterial** | **Coating-material** | **Menge Coatingmaterial [1]** |
|---|---|---|---|
| a) | Weißzement | Dynasilan F 8800 | 9 |
| b) | TZ1 | Dynasilan F 8800 | 11 |
| c) | TZ2 | Dynasilan F 8800 | 11 |
| d) | Weißzement | Dynasilan F 8261 | 11 |
| e) | TZ1 | Dynasilan F 8261 | 14 |
| f) | TZ2 | Dynasilan F 8261 | 14 |
| g) | Weißzement | FC-4432 | 15 |
| h) | TZ1 | FC-4432 | 15 |
| i) | TZ2 | FC-4432 | 15 |

Zur Austestung der Güte des Coatings wurde in einem einfachen Vorversuch die alkalische Reaktion des Weißzementes in Wasser ausgenutzt. Man streut dazu 3 g des entsprechend gecoateten Materials in 100 ml Wasser mit pH = 7, das zusätzlich einige Tropfen Phenolphtaleinlösung enthält. Man misst die Zeit bis zum Umschlag des Phenolphtaleins von farblos nach rot:

| **Versuch** | **Zeit bis Farbumschlag [min]** | **Aktivator** |
|---|---|---|
| Weißzement (ungecoatet) | Sofort | keiner |
| Beispiel 3a) | > 10 | keiner |
| Beispiel 3d) | > 10 | keiner |
| Beispiel 3g) | > 10 | keiner |

Zur Austestung der Wirkung in einem Mörtelsystem wurden die identischen Mischungen gemäß Tabelle 2 mit gecoatetem TZ eingesetzt und die entsprechenden Erstarrungszeiten gemessen:

| System | Anteil TZ | Erstarrungsbeginn [min] | Erstarrungsende [min] |
|---|---|---|---|
| PZ1/TZ1 | 10% TZ1 Bsp. 3b) | 30 | 90 |
| | 10% TZ1 Bsp. 3e) | 50 | 150 |
| | 10% TZ1 Bsp. 3h) | 35 | 105 |
| | | | |
| PZ1/TZ2 | 10% TZ2 Bsp. 3c) | 15 | 25 |
| | 10% TZ2 Bsp. 3f) | 25 | 60 |
| | 10% TZ2 Bsp. 3i) | 12 | 30 |
| | | | |
| PZ2/TZ1 | 15% TZ1 Bsp. 3b) | 40 | 70 |
| | 15% TZ1 Bsp. 3e) | 60 | 110 |
| | 15% TZ1 Bsp. 3h) | 43 | 85 |
| | | | |
| PZ2/TZ2 | 10% TZ2 Bsp. 3c) | 20 | 50 |
| | 10% TZ2 Bsp. 3f) | 35 | 90 |
| | 10% TZ2 Bsp. 3i) | 18 | 45 |

## Patentansprüche

1. Verwendung einer pulverförmigen Baustoffzusammensetzung, umfassend
a) ein reaktives Trägermaterial, sowie
b) eine auf das Trägermaterial aufgebrachte flüssige Polymerverbindung zur Einstellung der Verarbeitungszeit, wobei die gesteuerte Aushärtung durch das Ablösen der Polymerverbindung vom Trägermaterial erfolgt und wobei das Ablösen durch die Zugabe eines Aktivators unterstützt wird.

2. Verwendung nach Anspruch 1, **dadurch gekennzeichnet, dass** das Trägermaterial aus einem hydraulischen oder latent hydraulischen Bindemittel, ausgewählt aus der Gruppe Portlandzement, Portlandzementklinkermehle, Tonerdeschmelzzemente, Calciumsulfoaluminate, Natriumaluminat, CaSO₄ x nH₂O (mit n = 0 bis 1,5) und CaO besteht.

3. Verwendung nach Anspruch 1, **dadurch gekennzeichnet, dass** es sich beim Trägermaterial um anorganische Zusätze, ausgewählt aus der Gruppe CaSO₄ x 2H₂O, Aluminiumverbindungen wie Al(OH)₃ oder Al₂(SO₄)₃, Ca(NO₃)₂ und Ca(NO₂)₂, handelt.

4. Verwendung nach Anspruch 1, **dadurch gekennzeichnet, dass** als Trägermaterial organische Verbindungen, ausgewählt aus der Gruppe Calciumformiat, Weinsäure und deren Salze oder deren gemischte Salze, sowie Citronensäure und deren Salze oder deren gemischte Salze, Triethanolaminhydrochlorid, Tris(hydroxymethyl)-aminomethan, Hydrazide, verwendet werden.

5. Verwendung nach einem der Ansprüche 1 bis 4, **dadurch gekennzeichnet, dass** es sich bei der Polymerverbindung um mindestens einen Vertreter der Reihe Polyvinylalkohole, Polyvinylacetate, Polymere auf Basis AMPS, modifizierte oder unmodifizierte Biopolymere, wie Xanthane, Carrageenane, Celluloseether und Stärkeether, Silane, Polyethylenglykole und Wachse handelt.

6. Verwendung nach einem der Ansprüche 1 bis 4, **dadurch gekennzeichnet, dass** das Trägermaterial eine mittlere Teilchengröße von 0,001 µm bis 1 cm aufweist.

7. Verwendung nach einem der Ansprüche 1 bis 6 zur zeitlich gesteuerten Aushärtung von hydratisierbaren Baustoffgemischen.

8. Verwendung nach einem der Ansprüche 1 bis 7, **dadurch gekennzeichnet, dass** die gesteuerte Aushärtung durch das Ablösen der Polymerverbindung vom Trägermaterial insbesondere durch mechanische Einwirkung und/oder durch Einwirkung eines Lösungsmittels und vorzugsweise durch Wasser erfolgt.

9. Verwendung nach Anspruch einem der Ansprüche 1 bis 8, **dadurch gekennzeichnet, dass** der Aktivator vor, während und/oder nach dem Anmischen des Baustoffgemisches zugegeben wird.

10. Verwendung nach Anspruch 9, **dadurch gekennzeichnet, dass** als Aktivator mindestens ein Vertreter der Reihe der Borate, vorzugsweise in Mengen von 0,01 bis 50 Gew.-% , bezogen auf die Menge an Trägermaterial, eingesetzt wird.

11. Verwendung nach einem der Ansprüche 9 oder 10, **dadurch gekennzeichnet, dass** der Aktivator in flüssiger Form, als Pulver oder auf einem Trägermaterial zugesetzt wird.

12. Verwendung nach einem der Ansprüche 1 bis 11 in Baustoffgemischen, die neben Zuschlagsstoffen und Additiven Bindemittel, vorzugsweise in Form von Portlandzement, Portlandzementklinkermehlen, Tonerdeschmelzzementen, Kalk, CaSOₐ mit unterschiedlichen und einstellbaren Hydratstufen, Wasserglas, (aktivierbare) Schlacken, wie z.B. Hüttensande und Flugaschen, Calciumsulfoaluminate und/oder Phosphatzemente enthalten.

## Claims

1. Use of a pulverulent building material composition, comprising
a) a reactive support material and
b) a liquid polymer compound applied to the support material for adjusting the processing time, where the controlled curing is achieved by means of the detachment of the polymer compound from the support material and the detachment is aided by addition of an activator.

2. Use according to Claim 1, **characterized in that** the support material comprises a hydraulic or latently hydraulic binder selected from the group consisting of Portland cement, ground Portland cement clinkers, high-alumina cements, calcium sulfoaluminates, sodium aluminate, CaSO₄ x nH₂O (where n = 0-1.5) and CaO.

3. Use according to Claim 1, **characterized in that** the support material is an inorganic additive selected from the group consisting of CaSO₄ x 2H₂O, aluminum compounds such as Al(OH)₃ or Al₂(SO₄)₃, Ca(NO₃) ₂ and Ca(NO₂)₂.

4. Use according to Claim 1, **characterized in that** organic compounds selected from the group consisting of calcium formate, tartaric acid and its salts or its mixed salts, citric acid and its 'salts or its mixed salts, triethanolamine hydrochloride, tris(hydroxymethyl)aminomethane and hydrazides are used as support material.

5. Use according to any of Claims 1 to 4, **characterized in that** the polymer compound is at least one representative from the group consisting of polyvinyl alcohols, polyvinyl acetates, polymers based on AMPS, modified or unmodified biopolymers such as xanthans, carrageenins, cellulose ethers and starch ethers, silanes, polyethylene glycols and waxes.

6. Use according to any of Claims 1 to 4, **characterized in that** the support material has a mean particle size of from 0.001 µm to 1 cm.

7. Use according to any of Claims 1 to 6 for the controlled curing over time of hydratable building material mixtures.

8. Use according to any of Claims 1 to 7, **characterized in that** the controlled curing is achieved by means of the detachment of the polymer compound from the support material, in particular by mechanical action and/or by action of a solvent and preferably by means of water.

9. Use according to any of Claims 1 to 8, **characterized in that** the activator is added before, during and/or after mixing of the building material mixture with water.

10. Use according to Claim 9, **characterized in that** the activator used is at least one representative from the group consisting of borates, preferably in an amount of from 0.01 to 50% by weight, based on the amount of support material.

11. Use according to Claim 9 or 10, **characterized in that** the activator is added in liquid form, as powder or on a support material.

12. Use according to any of Claims 1 to 11 in building material mixtures comprising binders, preferably in the form of Portland cement, ground Portland cement clinkers, high-alumina cements, lime, CaSO₄ in different and adjustable stages of hydration, water glass, (activatable) slags such as slag sands and fly ashes, calcium sulfoaluminates and/or phosphate cements, and also aggregates and additives.

## Revendications

1. Utilisation d'une composition de matériau de construction en poudre, comprenant
a) une matière de support réactive, ainsi que
b) un composé polymère liquide appliqué sur la matière de support, destiné à l'ajustement du temps de mise en oeuvre, le durcissement réglé s'effectuant par séparation du composé polymère d'avec la matière de support et la séparation étant facilitée par l'addition d'un activateur.

2. Utilisation selon la revendication 1, **caractérisée en ce que** la matière de support consiste en un liant hydraulique ou hydraulique latent, choisi dans le groupe constitué pat le ciment Portland, les poudres de clinker de ciment Portland, les ciments alumineux fondus, les sulfoaluminates de calcium, l'aluminate de sodium, CaSO₄ × nH₂O (où n = 0 à 1,5) et CaO.

3. Utilisation selon la revendication 1, **caractérisée en ce que** pour ce qui est de la matière de support il s'agit d'additifs inorganiques, choisis dans le groupe constitué par CaSO₄ × 2H₂O, des composés d'aluminium tels que Al(OH)₃ ou Al₂(SO₄)₃, Ca(NO₃)₂ et Ca(NO₂)₂.

4. Utilisation selon la revendication 1, **caractérisée en ce qu'**on utilise comme matière de support des composés organiques choisis dans le groupe constitué par le formiate de calcium, l'acide d-tartrique et ses sels ou ses sels mixtes, ainsi que l'acide citrique et ses sels ou ses sels mixtes, le chlorhydrate de triéthanolamine, le tris(hydroxy-méthyl)aminométhane, des hydrazides.

5. Utilisation selon l'une quelconque des revendications 1 à 4, **caractérisée en ce que** pour ce qui est du composé polymère il s'agit d'au moins un représentant de la série constituée par des poly(alcool vinylique)s, des poly(acétate de vinyle)s, des polymères à base d'AMPS, des biopolymères modifiés ou non modifiés, tels que des xanthane, carraghénanes, éthers de cellulose et éthers d'amidon, des silanes, des polyéthylèneglycols et des cires.

6. Utilisation selon l'une quelconque des revendications 1 à 4, **caractérisée en ce que** la matière de support présente une taille moyenne de particule de 0,001 µm à 1 cm.

7. Utilisation selon l'une quelconque des revendications 1 à 6, pour le durcissement réglé dans le temps de mélanges de matériaux de construction hydratables.

8. Utilisation selon l'une quelconque des revendications 1 à 7, **caractérisée en ce que** le durcissement réglé s'effectue par la séparation du composé polymère d'avec la matière de support en particulier par action mécanique et/ou par action d'un solvant et de préférence par de l'eau.

9. Utilisation selon l'une quelconque des revendications 1 à 8, **caractérisée en ce qu'**on ajoute l'activateur avant, pendant et/ou après le mélange de la composition de matériau de construction.

10. Utilisation selon la revendication 9, **caractérisée en ce qu'**on utilise comme activateur au moins un représentant de la série des borates, de préférence en des quantités de 0,01 à 50 % en poids, par rapport à la quantité de matière de support.

11. Utilisation selon l'une quelconque des revendications 9 et 10, **caractérisée en ce qu'**on ajoute l'activateur sous forme liquide, sous forme de poudre ou sur une matière de support.

12. Utilisation selon l'une quelconque des revendications 1 à 11, dans des compositions de matériaux de construction qui outre des granulats et additifs contiennent des liants, de préférence sous forme de ciment Portland, poudres de clinker de ciment Portland, ciments alumineux fondus, chaux, CaSO₄ à degrés d'hydratation différents et ajustables, orthosilicate, laitiers (activables), comme par exemple laitiers de hauts-fourneaux et cendres volantes, sulfoaluminates de calcium et/ou ciments au phosphate.
